# EUROPEAN PATENT APPLICATION

(11) **EP 1 353 258 A1**
(43) Date of publication of application: **15.10.2003**
(21) Application number: 01967788.9
(22) Date of filing: 21.09.2001
(51) Int. Cl.: G06F 1/00, G06F 9/44

(54) **COMPONENT SERVICE NETWORK SYSTEM**

(30) Priority: 21.09.2000 JP 2000287473
(71) Applicant: EC-One, Inc., Tokyo 103-0025 (JP)
(72) Inventor: KAYAMA, Yukihiro, EC-One, Inc., Tokyo 103-0025 (JP); SAISHU, Eihiro, EC-One, Inc., Tokyo 103-0025 (JP)
(74) Representative: Cross, Rupert Edward Blount
(86) International application number: JP0108250
(87) International publication number: WO02025412

(57) **Abstract**

In the present invention, an application is developed by a development entity in an execution mode which is either an ASP mode conforming to a conventional ASP business or a local mode in which a base component or cPackage to be used is incorporated in the application 12, by centering a cBanK 10 being a business entity managing base components or a cPackage hierarchically constructed of based components. When a user 14 uses the development application, a charging system is appropriately set up according to the execution mode. Therefore, a network of ASP business can be built, thereby contributing to expansion of stand-alone ASP business.

## Description

### Field of the Invention

The present invention relates to component service network systems wherein software is divided into components and stored on a network, thereby enabling a third party's reuse.

### Background of Art

With the recent advances of the IT revolution, the system integration industry, which develops applications or software, has delayed streamlining its operations as it has centered on human wave tactics. It is obviously difficult to streamline development business with creativity at its core. However, companies are demanding the "knowledge management" in which the experience, expertise and know-how accumulated in a division are utilized in other divisions.

Therefore, the applicant has directly addressed this issue during his engagement in the system integration business. The applicant has developed a knowledge management system using a mechanism wherein software is divided into components and stored on a network to enable a third party's reuse, thus introducing and using the mechanism himself and thereby improving productivity in the system integration business.

Specifically, software developed using Java technology is divided into components and stored in a repository (hereinafter referred to as "component bank [cBank™]"), then a development tool for developing an application using such components is developed, and the repository is provided with a management system, thereby promoting internal utilization.

A license business in which components are licensed off-line or downloaded using a network, and an ASP ("Application Service Provider") business in which components are used on a network and a fee for their use is charged based on the amount used, are contemplated in the use of the cBank™.

However, the conventional ASP business is quite simple in that applications are simply downloaded from a network and used, and fees are charged for this downloading and use. Therefore, it is impossible to simply combine the cBank™ and ASP business. That is, it is necessary to resolve the issues that may not occur in a simple expansion of an ASP business, such as how to combine components to construct an application or how to manage and use on a network an application that incorporates one or more components, and each of the incorporated components. In other words, a simple expansion of the ASP business cannot sufficiently respond to the demands of an ASP business in which a cBank™ service provider provides components to a cBank™ user's ("cBank's user" here includes an application developer) end user through the cBank's user's function of developing an application for its end user and the demand of an ASP business conducted by a cBank™ user (including the cases where a server with components is provided for the business and where the business is outsourced to a cBank™ service provider). Accordingly, there has yet to be a business in which such components are provided as a part of an ASP business.

In consideration of the above facts, an object of the present invention is to obtain a component network service system that enables further development of a conventional ASP business by collectively managing components for an application having one or more components, and that enables a cBank™ user to reduce the burdens of development through achieving a high rate of productivity by using the components, and also enables an end user to obtain an application meeting the required specifications in a short time and to receive a charging service based on the use of components, in accordance with the demands of the cBank™ user and the end user.

### Disclosure of the Invention

The present invention is characterized in that a business entity that collectively manages base components, which are comprised of modularized and reusable software, or a cPackage that is constructed by further combining the base components, can transmit via a network the base components or the cPackage to a user that develops an application using the base component or the cPackage, and the business entity can charge a fee based on the amount used by an end user, who is a final user of an application developed by the user using the base components and the cPackage.

The present invention is characterized in that the user is a development entity of application software developed using the base components or the cPackage.

Further, the present invention is characterized in that a license for a user is issued by the development entity, upon delivery of application software to the user, simultaneously informing the business entity of such delivery.

Here, an execution mode of the base components or the cPackage may be initially set by the business entity, or may be reset by the development entity at the time of development based on the right to reset provided to the development entity. The present invention is characterized in that a focal mode in which a base component or a Package is incorporated in an application program and executed in such application at the time of execution of the application, and an ASP mode in which the base component or the cPackage is reserved for use, at the time of development, and only a processing result by the reserved base component or the reserved cPackage is provided at the time of execution of the application, are provided.

The execution mode of the base component or the cPackage can be initially set and also be reset.

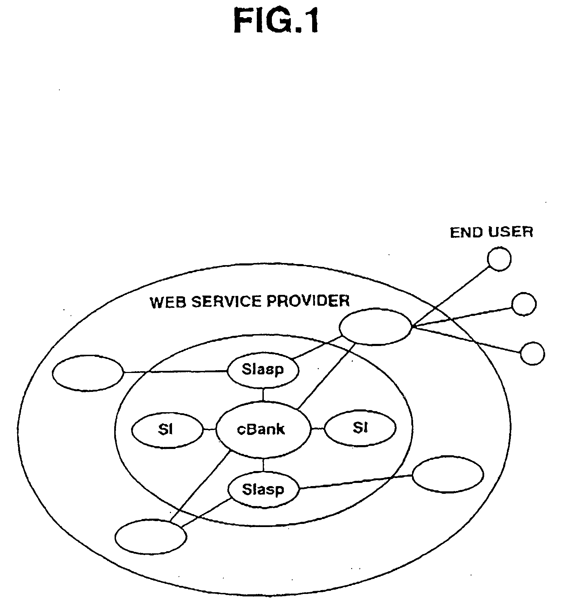

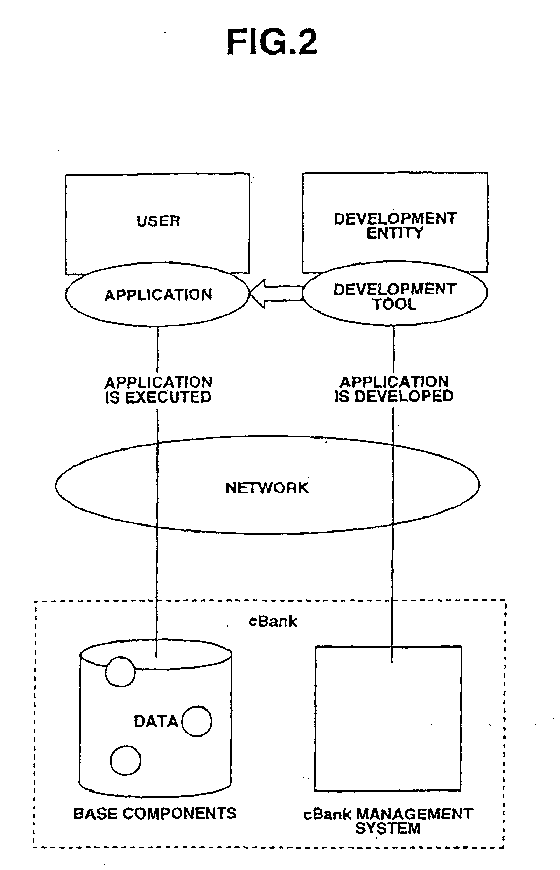

According to the present invention, an example of the images showing the relationship between a business entity and a user is shown in Figs. 1 and 2, in which a service business that provides a board application development environment and an ASP business that grants the use of a function of a base component, e.g., for a web site.

Delivery of contents to a consumer or a company, who is a user, can also be conducted by a web service provider selecting a service provided by a business entity.

A manager of the business entity can set an execution mode (ASP mode and local mode) for each of the base components having a minimum unit of a function.

A base component or a cPackage set in a local mode is compiled in an application at the time of development of such application and executed in the application at the time of execution.

A base component set in an ASP mode is not incorporated into an application, and, instead, a booting component to read this base component (the booting component itself is set in a local mode) or a proxy is added into such application.

Therefore, at the time of executing an application, a reading component automatically connects the application to the business entity to read a base component and executes it in the business entity and only a processing result is sent back to the application.

The business entity can grant a development entity a right to reset an execution mode for each base component.

The business entity distributes a dedicated development tool to an application developer (development entity), such as an Sl company, and grants them the use of a base component and a cPackage. The development entity can greatly improve the productivity of its Sl services by using such base component or cPackage.

Concerning a base component or a cPackage for which a right to reset has been granted, the development entity can use the same upon making an prior arrangement with the business entity with regard to the conditions, such as a fee for using such component, and can reset, for example, a base component in a local mode to an ASP mode at the time of development,

Concerning a base component in an ASP mode set by the business entity, when such base component is provided with permission for resetting but is not reset, a development entity not having an ASP function can conduct ASP business through the business entity.

Further, a development entity having its own ASP function can conduct ASP business by resetting at the time of development the mode of a base component to an ASP mode +, by which the development entity could be an ASP (i.e. resetting an ASP mode to an ASP + mode) (A detailed explanation is given in Fig. 1 below).

Further, a combination of base components can obtain a composite function close to that of an application level, and thus the above mechanism of an execution mode setting/resetting can be constructed in multiple phases. A group of combined base components is referred to as a "cPackage" and an execution mode can be set/reset for each cPackage.

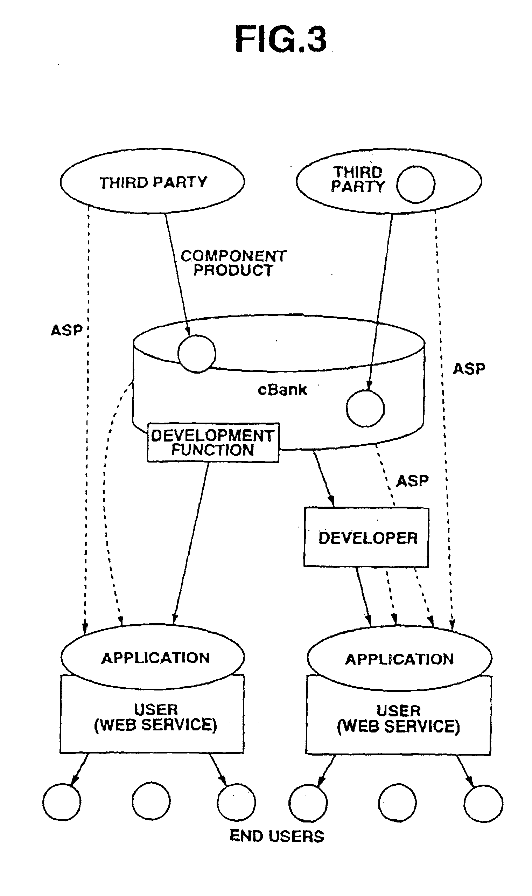

Granting a development entity a right to reset an execution mode of a base component or a cPackage held by a cBank™ is explained above; however, it is also possible that a cBank™ holds a third party's component and grants a right to reset the same to a development entity. In this case, the cBank™ conducts ASP business representing such third party. As shown in Fig. 3, a cBank™'s role as an ASP business provider varies depending on whether such third party has an ASP function.

### Detailed Explanation of Drawings

Fig. 1 is a schematic diagram of a component network system according to the present invention.
Fig. 2 is a block diagram of a configuration and processing flow of a component network system according to the present invention.
Fig. 3 is a diagram of a system configuration in the case where a third party that has a component is introduced to the system.
Fig. 4 is a diagram of a structure of a system of an aspect of the present invention.
Fig. 5 is a block diagram of a configuration and processing flow of a component network system based on a base component of an aspect of the present invention.
Fig. 6 is a block diagram of a flow for processing executed in an ASP mode in a configuration based on a base component of an aspect of the present invention.
Fig. 7 is a block diagram of a configuration and processing flow of a component network system based on a base component and a cPackage of an aspect of the present invention.
Fig. 8 is a flow chart of a charging system in a component network system of an aspect of the present invention.
Fig. 9 is a block diagram showing a flow of access to a component in each execution mode.

Further, in the Figures, a reference numeral 10 is a cBank™ (business entity), 12 is a development entity, 14 is a user, 14A is a user in a local mode, 148 is a user in an ASP mode, 16 is a network and 18 is a management system (within the cBank).

### Best Mode for Implementing the Invention

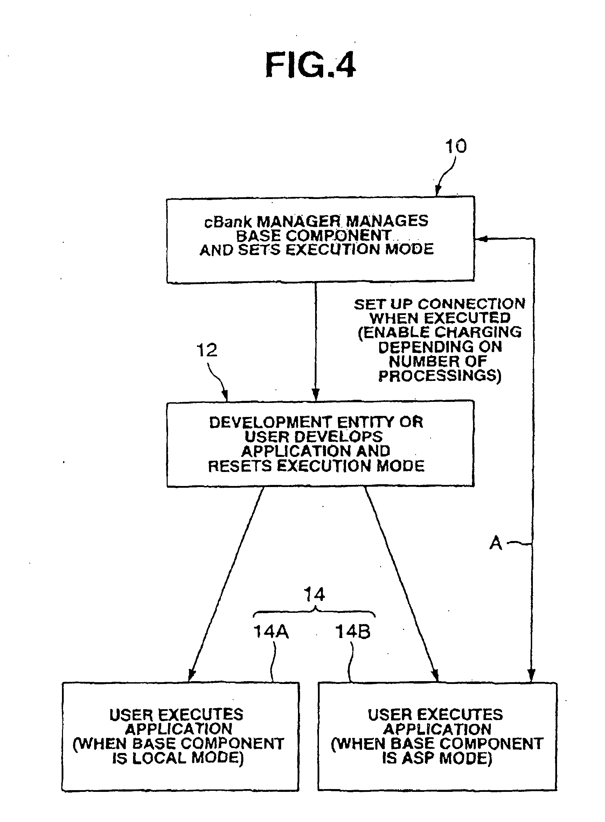

Fig. 4 is a diagram showing a basic concept of a component service network system of an aspect of the present invention.

This system comprises a cBank 10 as a business entity, a development entity 12 as a user that develops an application using a base component and a cPackage stored in the cBank 10, and a user 14 that executes an application developed by the development entity 12.

The cBank 10 principally engages in the management of base components and cPackages, and the management of the settings of execution modes, etc.

The development entity 12 principally engages in the development of an application based on a base component and a cPackage introduced from the cBank 10 and the setting/resetting of modes when the application is executed. Further, the business entity 12 can also be served by the user 14 described below.

The user 14 executes an application developed by the development entity 12. In this case, however, there are cases where a base component or a cPackage is in a local mode (user 14A) and where a base component or a cPackage is in an ASP mode (user 148).

The cBank 10 is connected to these users 14A and 14B (through the Internet) when the application is executed, and charges based on the number of processing times, etc. (see an arrow A in Fig. 4).

Here, a local mode (compile mode) adopted for the user 14A is a mode in which a base component or a cPackage (component package) is compiled in a program at the time of development by the development entity 12 and executed within the application at the time of execution of the application in order to perform its function.

However, an ASP mode adopted for the user 14B is a mode in which a base component or a cPackage is not compiled in a program but only reserved for use, at the time of development of an application, and the user 14B accesses the application through the cBank 10 and the network each time he executes the application, and only receives a processing result using the base component or the cPackage.

The above execution mode can be initially set by the business entity in the cBank 10 to either a local mode or an ASP mode for each base component or cPackage, and the setting can also be entrusted to the development entity 12 (permission for resetting).

That is, the settings of execution modes by which a base component or a cPackage is managed by the cBank 10 are described as follows:
1. Executable only in a local mode:
   The manager of the cBank 10 sets a component or a cPackage in a local mode and rejects resetting by the development entity 12.
2. Executable only in an ASP mode:
   The manager of the cBank 10 sets a component or a Package in an ASP mode and rejects resetting by the development entity 12.
3. Selection of a mode by the development entity 12:
   The development entity 12 is permitted to reset a mode set by the cBank 10.

By enabling the development entity 12 to reset (set) an execution mode, the development entity 12 itself can be a business entity for the execution of the base component or the cPackage (see Table 1).

The appropriateness of or conditions for the setting/resetting of an execution mode by the business entity 12 may be determined through a prior arrangement with the cBank 10 or upon consultation with the cBank 10 in each case.

**[Table 1]**

| Setting by cBank™ | Resetting by the business entity | Service entity using base components or cPackages |
|---|---|---|
| ASP | Not permitted | cBank™ |
| | Unchanged | Development entity (Development entity is represented by a cBank™ .) |
| | ASP+ | Development entity itself provides an ASP service. service. |
| | Local | Development entity (Development entity is represented by a cBank™.) |
| | Local+ | Development entity (Development entity grants a license.) |
| Local | Not permitted | cBank™ |
| | Unchanged | Development entity (Development entity is represented by a cBank™.) |
| | Local+ | Development entity |
| | ASP | Development entity (Development entity is represented by a cBank™.) |
| | ASP+ | Development entity itself provides an ASP service. |

Further, according to this system, during development of an application, the development entity 12 searches for a base component or cPackage having a necessary function from the cBank™ repository via a network, using a development tool specially prepared by the cBank 10, and then develops the application using such base component or cPackage. The base component or cPackage having a necessary function may be provided collectively from the business entity to the development entity off-line. At this time, the development entity 12 may reset an execution mode of each base component or cPackage when such resetting is permitted.

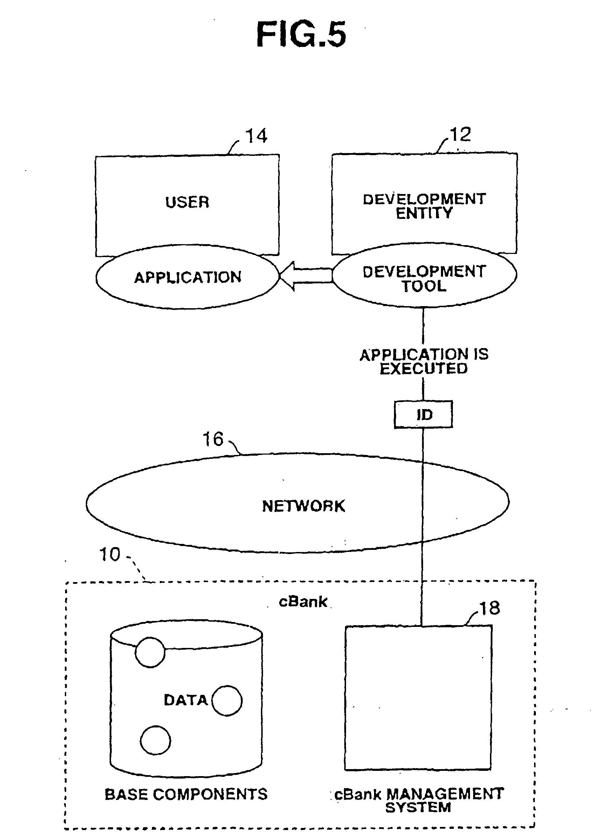

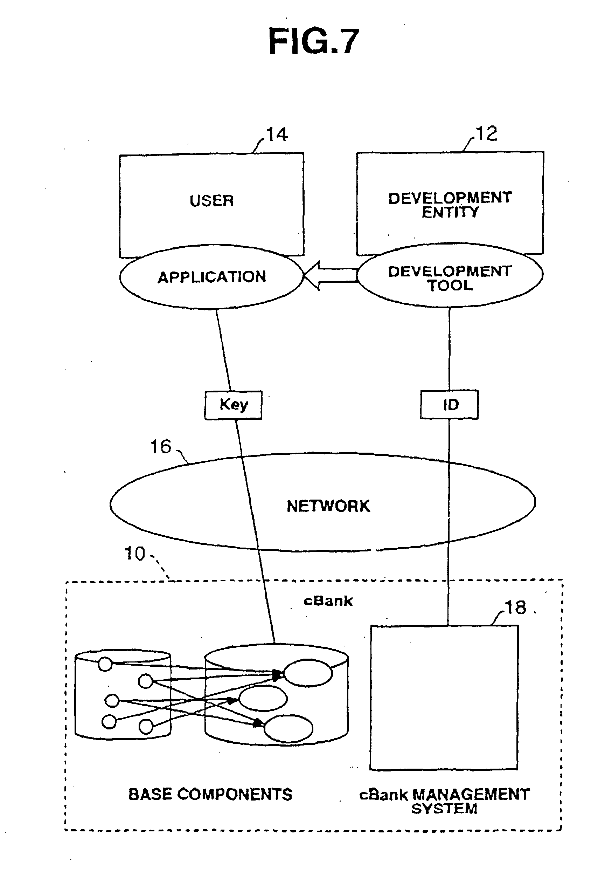

In Figs. 5 and 7, the outline of the system flow is shown. Further, Fig. 5 shows a configuration comprising only the base components, and Fig. 7 shows a configuration comprising a base component and cPackage.

As shown in Figs. 5 and 7, a development tool, which is distributed from the cBank 10, is activated by an lD provided specifically to each development tool, thereby securing a connection to the cBank 10.

The development entity 12, which develops applications, delivers an application developed using the cBank 10 to the user 14A or 148, and informs the cBank 10 of such delivery. Using this information, the cBank 10 confirms the identity of the user 14A or 14B, makes an agreement with them and confirms their payment, etc., and then issues an execution key to the user 14A or 14B.

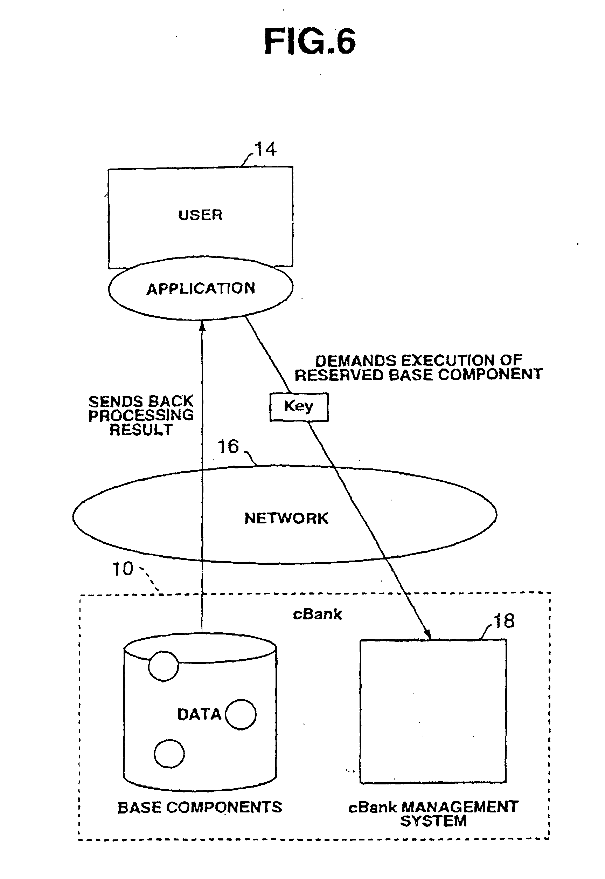

Fig. 6 indicates an ASP mode including base components (see Fig. 5), that is, a system flow for the user 14B.

When the user 14B starts and executes an application using an execution key, in the case where the application designates a base component or cPackage in an ASP mode, a booting component is started in the phase of executing such base component or cPackage, and is automatically connected to a management system 18 of the cBank 10 via a network 16. After user authentication by the management system 18 (confirmation of the execution key), such base component or cPackage is read from a repository of the cBank 10 and executed in the cBank 10, and then only a processing result is delivered to the application

In this case, the management system 18 processes operations such as the confirmation of the user 14, the execution and monitoring of, and charging for, etc., a reserved base component or a reserved cPackage.

For the base component or cPackage set in an ASP mode, a method for processing such operations can be set in advance in a form corresponding to the number of times, the length of time, the form, etc. of the use of such base component or cPackage.

When a base component or cPackage is set by the cBank 10 in an ASP mode, the cBank 10 charges a fee either directly to the user 14B or through the development entity 12. This is preferably applied in the case where a fee is charged per transaction.

However, when the development entity 12 sets (resets) a base component or cPackage in an ASP mode, the development entity 12 charges a fee to the user 14B. In this case, the cBank 10, representing the development entity 12, can charge the fee.

When the user 14A executes an application in a local mode, a base component or cPackage is executed within an application without connecting to the cBank 10. In this case, it is possible to cause an agent program attached to the base component or cPackage to inform an execution monitoring system in the management system 18 of the cBank 10 of such execution.

A charging system for a base component set in a local mode can be applied to a fee system for e.g. a lump sum license fee, a monthly license fee.

Concurrently, an execution mode of a base component or a cPackage can be set separately; therefore, both an ASP mode and a local mode could be included in an application. In this case, a user becomes both the user 14A and the user 14B.

The management system 18 of the cBank 10, as shown in Table 2, has, for example, an execution mode setting table as a method to manage an execution mode setting for each development entity 12 (AA in Table 2). The user 14 (A and B in Table 2), applications (Applications 1 through 3 in Table 2), base components and cPackages (Components 1, 3, 4, 5, 6, 7and 9), and charges thereon, can be managed in accordance with the table.

**[Table 2]**

| Development entity | User | Application | Component | Execution mode setting | | Demand for ASP business representation |
|---|---|---|---|---|---|---|
| | | | | cBank™ | Development entity | |
| AA | A | App1 | Comp4 | ASP | Local | -------- |
| | | App2 | Comp7 | Local | Not permitted | -------- |
| | | App3 | Comp1 | ASP | ASP | Yes |
| | | | Comp3 | Local | Not permitted | -------- |
| | B | App1 | Comp5 | ASP | ASP | No |
| | | | Comp9 | Local | -------- | -------- |
| | | App2 | Comp3 | ASP | Not permitted | -------- |
| | | | Comp6 | Local | -------- | -------- |

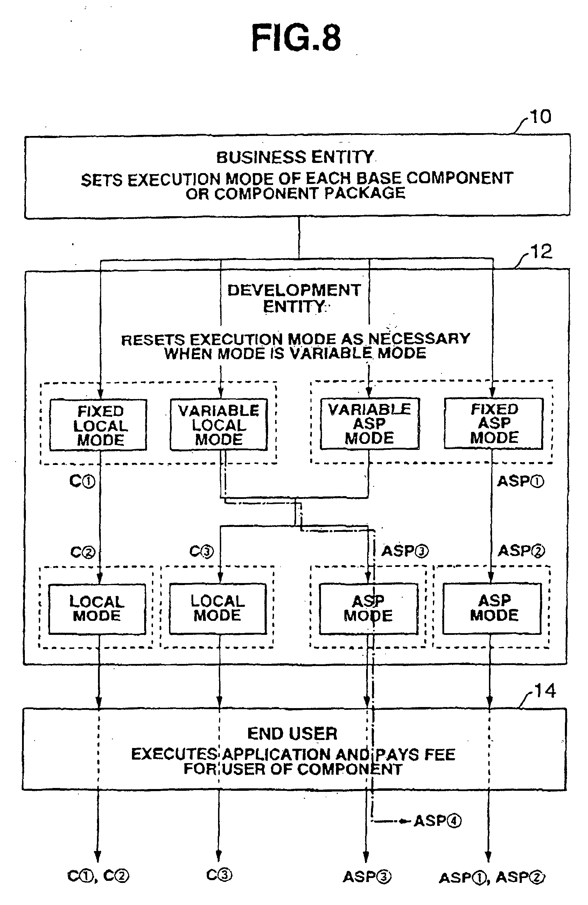

Fig. 8 is a diagram of a charging system in an execution mode (fixed local mode, variable compile mode, variable ASP mode and fixed ASP mode) set by the cBank 10, which is a business entity. In this case, the development entity 12 has a base component or cPackage in a variable mode, that is, in a state in which the execution mode can be varied, and, as a result, the development entity 12 are provided with three charging systems in local modes (C1 through C3) and four in ASP modes (ASP1 through ASP4).

In ASPs 1 and 2, all fees are charged directly to a cBank's end user. However, when the development entity has an ASP function, it can charge the fees directly to the end user through a license agreement with the cBank.
- ASPs 1 and 2: cBank pays the development entity a commission based on the charge.
- ASP3: The charge is divided between the development entity and the cBank
(The development entity's fee structure is applied to end users).

For C1, C2, C3 and ASP4, the development entity sets the fee structures and charges the end users.

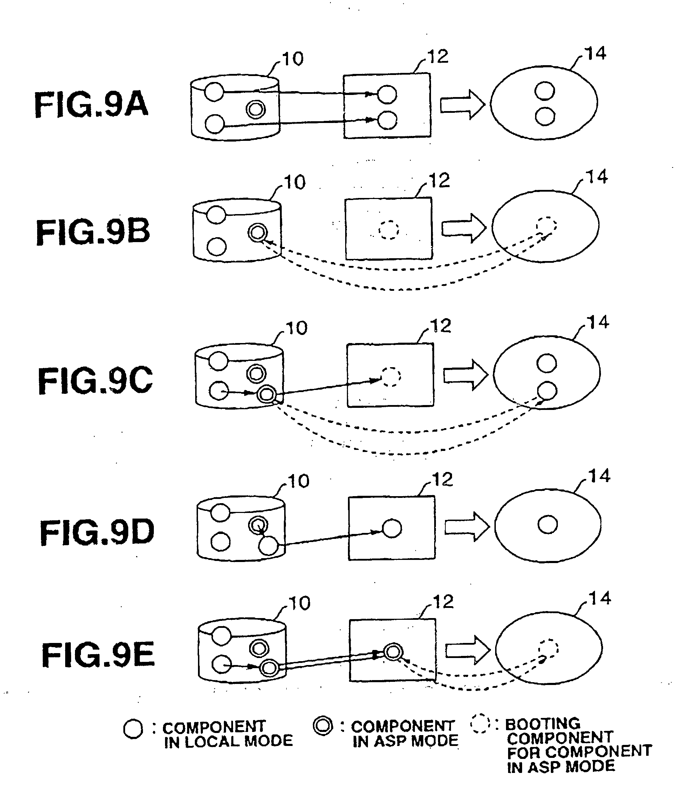

cBank and the development entity make an arrangement regarding the charging system, the fee structure and the division of areas between them. cBank is provided with an online payment function for every charge generated; therefore, this function can be used as necessary. A flow for using the base component or cPackage of the present system is described below for each execution mode in reference to Fig. 9.

First, as shown in Fig. 9 (A), in the case of a base component or cPackage in a local mode only, when the user 14 executes an application provided by the development entity 12, which has been prepared using a base component or cPackage stored in the cBank 10, it is unnecessary for the user 14 to access the cBank 10 and the development entity 12 upon execution of the application as the base component or cPackage is included in the application.

Next, as shown in Fig. 9 (B), in the case of a base component or cPackage in an ASP mode only, as neither the base component nor cPackage is included in the application prepared by the development entity 12, a booting component or proxy is incorporated in the application instead.

Thus, when the user 14 uses a base component or cPackage, the booting component is started and accesses the base component or cPackage stored in the cBank 10, and processing is performed in the cBank 10, and only a processing result is sent back.

As shown in Fig. 9 (C), when an execution mode is reset by the development entity 12 from a local mode to an ASP mode and the cBank conducts the ASP business representing the development entity 12, a base component or cPackage in a local mode is copied onto an ASP mode and then used in an application prepared by the development entity 12. Except for this point, the processes are the same as those in Fig. 9 (B).

Next, as shown in Fig. 9 (D), when an execution mode is reset by the development entity 12 from an ASP mode to a local mode, a base component or cPackage in an ASP mode is copied by the cBank 10 onto a local mode and then incorporated into an application prepared by the development entity 12. Except for this point, the processes are the same as those in Fig. 9 (A).

As shown in Fig. 9 (E), when the development entity 12 resets an execution mode from a local mode to an ASP mode, and also conducts the ASP business, a component or cPackage in a local mode is copied by the cBank 10 onto an ASP mode and then transferred to the development entity 12 (in accordance with a prescribed license agreement), and a booting component is incorporated in an application to be delivered to a user. Thus, when the user 14 uses the base component or cPackage in an ASP mode, by accessing the development entity 12, the base component or cPackage in an ASP mode, which has been transferred to the development entity 12, performs processing, and only a processing result is sent back to the user 14. Methods for switching the execution modes (setting/resetting) include a method in which a local or ASP function is provided in advance to each component and is automatically switched upon the receipt of a direction at the time of setting/resetting, and a method in which two components (ASP mode component and local mode component) are prepared and either can be selected in accordance with a setting/resetting.

According to the present invention, an application is developed by the development entity 12 in an execution mode that is either an ASP mode conforming to a conventional ASP business or a local mode in which a base component or cPackage is incorporated in the application, by centering the cBank 10, which is a business entity that manages base components or a cPackage hierarchically constructed from based components. When the user 14 uses the developed application, an appropriate charging system is set up according to the execution mode. Therefore, a network of ASP business can be built, thereby contributing to the expansion of stand-alone ASP business.

Further, ASP business using a base component or a cPackage can be entrusted to the business entity 12 as necessary, rather than having the cBank 10 collectively manage the same all the time, and a base component or a cPackage, which belongs to a new business entity 12, can also be written in the cBank 10.

### Embodiment

A home server as described below is a common example of use of the components in an ASP mode.

It is assumed that a home has a home server and that all electric appliances in the home are connected via a network (wired or wireless).

When one of the networked electric appliances malfunctions and the home server is automatically informed of the necessity of changing a part of the appliance, a specific application in the home server is started and an ASP booting component included in the application accesses an ASP server via the internet.

The ASP booting component in the ASP server is started and checks the names of the part and its maker in the information provided on the malfunction and searches for a substitute part from a maker that is compatible with the maker of the part, and then reports the name of the part, maker, price, delivery date and provides an order button, to the home server.

When a person in the home pushes an order button corresponding to the most favorable maker's part, a settlement booting component in the application is started, and accesses a server of a credit company, etc., that provides payment services, and a settlement component confirms the person's bank account and performs the payment processing.

### Industrial Applicability of the Invention

As described above, the present invention has advantages of further developing the conventional ASP business by collectively managing application software, which incorporates a plurality of components, on the basis of the components, and of reducing the burden on users by responding to their needs.

## Claims

1. A component service network system, wherein a business entity that collectively manages base components, which comprise modularized and reusable software, or a component package ("cPackage") that is hierarchically constructed by further combining said base components, can transmit via a network said base components or said cPackage to a user that develops an application, and said business entity can charge a fee in accordance with an amount used by said user or an end user.

2. A component network service system according to claim 1, wherein said user is a development entity of application software developed using said base components or said cPackage.

3. A component service network system according to claim 2, wherein a license for a user is issued by said development entity, upon delivery of application software to said user, simultaneously informing said business entity of said delivery.

4. A component service network system according to any one of claims 1 through 3, wherein execution modes of said base components or said cPackage include a local mode in which an execution mode is initially set for each of said base components or said cPackage at the time of development and executed in an application at the time of execution of said application, and an ASP mode in which said base components or said cPackage is reserved for use, at the time of development, and only a processing result by said reserved base components or said cPackage is provided at the time of execution of the application.

5. A component service network system according to claim 4, wherein said execution mode of said base components or said cPackage is initially set.

6. A component service network system according to claim 4, wherein said execution mode of said base components or said cPackage can be reset.
